Europäisches Patentamt

European Patent Office

Office européen des brevets

(11) Publication number: 0 516 210 A1

# EUROPEAN PATENT APPLICATION

(21) Application number: 92201373.5

(22) Date of filing: 14.05.92

(51) Int. Cl.⁵: H04L 12/28, H04M 9/02

(30) Priority: 29.05.91 NL 9100926

(43) Date of publication of application:
02.12.92 Bulletin 92/49

(84) Designated Contracting States:
AT BE CH DE DK ES FR GB GR IT LI LU NL PT
SE

(71) Applicant: Koninklijke PTT Nederland N.V.
P.O. Box 95321
NL-2509 CH The Hague(NL)

(72) Inventor: Bruijns, Hendrik Matthijs Johannes
Peter van Anrooylaan 14
NL-2343 NC Oegstgeest(NL)
Inventor: Schot, Abraham Jannis Johannis
Coehoornsingel 11
NL-9711 BM Groningen(NL)

(54) **Bus system, in particular of domestic or small-business use.**

(57) In-house bus system in which, via port units (2, 3), appliances (21, 31) are connected to a bus (1) via switch contacts (22, 32) which form part of said port units. Between the port units, system control signals can be exchanged and under the control thereof appliances can be connected to the bus or disconnected again therefrom. The control signals are DTMF signals because of the cheap processing components. Both the DTMF control signals between the port units and the (DTMF or other) appliance signals are exchanged via the same (two-core) bus. For this purpose, the bus has two modes: the system mode and the appliance mode. In the first, (system control) signals are exchanged between the port units and in the second, signals are exchanged between the appliances coupled to the bus. Mode switching is achieved by a mode switching signal. This may be, for example, also a DTMF signal or a DC or an RF signal.

Fig. 1

## A. BACKGROUND OF THE INVENTION

The invention relates to a bus system, in particular for domestic or small-business use, comprising a transmission bus and port units, for exchanging appliance signals between appliances connected to said transmission bus via said port units, it being possible to set said port units by means of system control signals to a first, activated state in which the connected appliance is switched through to the transmission bus, or to a second, unactivated state in which the connected appliance is isolated from the transmission bus.

Such a bus system is disclosed, inter alia, by NL 8400115, in which a system is described for mutually coupling, in particular, audio equipment, such as an amplifier, a CD player, a record player and the like. In said system, at least two channels are always in use: one channel for the transmission of (system) control signals and at least one channel for the transmission of the (audio) signals to be exchanged between the equipment connected to the system. The various channels can be formed by separate cable cores or by the use of different frequency bands.

## B. SUMMARY OF THE INVENTION

The invention thus provides a bus system as stated above which is intended, in particular, as a basis for an in-house telephone system. In order to be able to profit in an optimum way from the present telephone technology and the components available therefore, use is made, according to the invention, of DTMF-coded signals as system control signals. The DTMF control signals are able to activate the port units mentioned and incorporated in the bus system, and consequently to switch appliances through to the bus system. In the same way, appliances can be disconnected from the bus system.

Preferably, use is made of only one transmission channel (if only with a view to cost saving), which channel is used both for the transmission of the signals to be exchanged between the appliances and for the transmission of system control signals (for coupling and decoupling the connected appliances) to be exchanged between the port units. To achieve this, the bus system can be set to a first or to a second mode. In the first mode (the appliance mode), the transmission channel can be used by the connected appliances to exchange signals ('appliance signals'). In the second mode (the system mode), the transmission channel is used to exchange signals ('system control signals') between the port units. Every change in mode is preceded by a 'mode switching signal'. Said switching signal should preferably be such that it does not give rise to confusion with the appliance signals or with the system control signals; in other words, it must not be capable of being regarded by the appliances as an appliance signal, or by the port units as a system control signal. The switching signals may be formed by DTMF signals which are coded using DTMF codes not used as DTMF control codes for controlling the control units or as DTMF-coded appliance signals possibly to be exchanged by the appliances. It is furthermore possible to use a switching signal which is below or above the DTMF frequency range, or - to put it somewhat more broadly - below or above the 'speech band' (300..3400 Hz). One option is that the switching signal is formed by a DC signal, that is to say a positive or negative change in the direct-voltage or direct-current level of the appliance signals or control signals, respectively. For example, at the start of a control signal, the DC level is lowered, and at the end thereof it is raised again to the original level. Another option is that the switching signals are relatively high-frequency signals which are situated above the DTMF band and which are sent out prior to and subsequent to the exchange of system control signals by the port units on the bus system.

## C. REFERENCES

NL 8400115 [PHILIPS]

## D. EXEMPLARY EMBODIMENTS

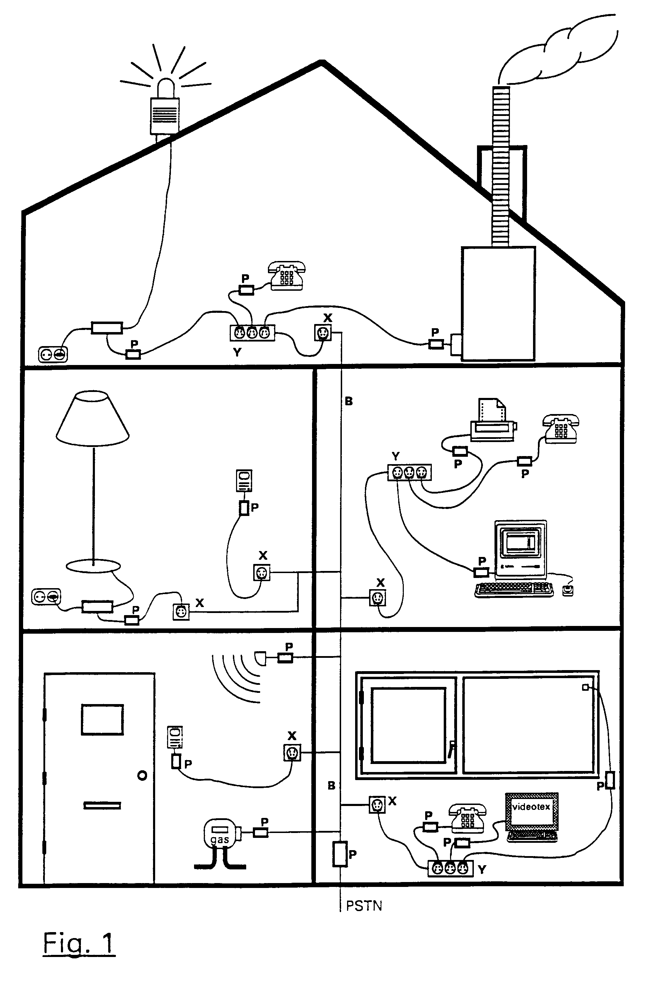

Figure 1 shows a general view of the bus system according to an exemplary embodiment of the invention as it may be installed in a private dwelling house. In the dwelling house shown, a bus B is installed which is formed simply from two-core telephone cable and/or cord. This two-core bus B is formed by lengths of two-core telephone cable between fixed telephone socket outlets X and lengths of two-core telephone cord between the fixed socket outlets X and detachable socket outlets Y. Port units P can be connected to the bus B formed in this way by plugging their connecting cord into the fixed or detachable socket outlets X or Y. Various appliances inside the dwelling house are able to make contact with one another and exchange signals via their port units P. The appliances may be telecommunication appliances, such as telephone sets, or data appliances, such as PCs, and also detectors or sensors, such as smoke detectors or burglar alarms or temperature sensors, or switches for the remote switching of lighting or heating. The appliances are able to exchange signals not only with one another but also with 'the outside world', namely via a port unit P which is connected to the public telephone network PSTN.

The port units P (by means of which appliances are connected to the bus B or disconnected therefrom) are controlled by means of DTMF control signals (in that case the bus is in the 'system mode'). The signals to be exchanged by the appliances switched through to the bus may be totally different in nature: analog speech can be exchanged between two telephone sets (preceded and followed, however, by telephone control signals such as a bell signal and the like), sequences of binary signals are exchanged between a PC and a printer, and an appliance can be switched on or off in another part of the house by means of a DTMF signal from, for example, one of the telephone sets or a sensor (for example, a room thermostat of the central heating) or it can be set to a particular value (for example, the sunshield can be adjusted to a particular position by keying in a particular value on the telephone set); in this last case, the DTMF signal is therefore an appliance signal generated by an appliance and not a system control signal generated by a port unit.

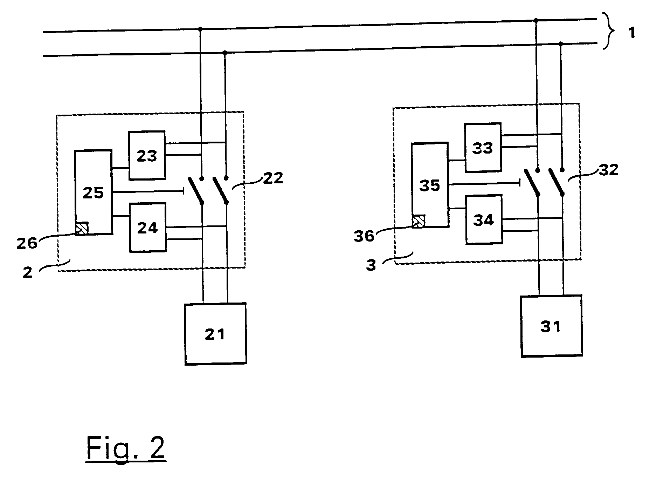

Figure 2 shows a section of the bus B formed by the two-core cable 1 to which two port units P, indicated in this figure by port unit 2 and port unit 3, are connected. Connected to each port unit is an appliance: appliance 21 to port unit 2, and appliance 31 to port unit 3. The appliances 21 and 31 can be connected to a cable 1 by means of the port units 2 and 3, or isolated therefrom, namely by means of the switches (relay contacts) 22 and 32. The switches 22 and 32 are controlled by control devices 25 and 35. The switches 22 and 32 can be activated (via the control devices 25 and 35) from the side associated with the bus B (cable 1) or from the side associated with the connected appliances 21 and 31. From the appliances 21 and 31, the control devices 25 and 35 can be seized via appliance interfaces 24 and 34, and from the cable 1 via bus interfaces 23 and 33. Each of the port units 2 and 3 have a unique identification code stored in the code devices 26 and 36.

If the appliance 21 wants to contact appliance 31, this is indicated by appliance 21 to the interface 24 by the exchange of a code signal with the interface. Depending on the type of the appliance 21, this is DTMF signal or another type of signal, for example a DC signal when the receiver of a telephone set is lifted or a sensor contact is closed or opened, or an AC call signal if the port unit is the 'local line port' connected to the public telephone network PSTN; if the port unit is connected to a PC, the port unit takes the form of a plug-in board and the code signals to be exchanged with the interface 24 take the form of PC bus signals. Owing to these various types of code signals, there are therefore various types of port units, in which the differences thus consist in the various appliance interfaces 24, for the various types of connected appliances. The call from the appliance side is passed by the appliance interface 24 to the control device 25. This device 25 activates the bus interface 23, which then detects (by 'eavesdropping' or by recording the bus status) whether the bus is free or busy. If the bus is busy, this is signalled (via the control device 25 and the appliance interface 24) to the appliance. If the bus is free, (that is to say, not in use as a connection between two (or more) appliances), the bus interface 23 transmits to all the bus interfaces 33,.. via the bus a mode switching signal which is received by all the bus interfaces and converted into a signal to their control devices 35,.., which signal opens (insofar as that is not already the case) the contacts of the switches 32,.., thereby achieving the result that signals originating from the appliances cannot under any circumstances reach the bus in the control mode. In particular, this is of importance if a high priority is assigned to the port unit 2, as is the case if the connected appliance 21 has an alarm function, such as a smoke detector. In that case, as soon as the appliance 21 places a call, this is converted without delay (even if the bus is busy) by the control device 25 and the bus interface 23 into a mode switching signal, as a result of which (as stated) the bus is rendered 'free' of all possible appliance signals.

The switching signal mentioned is, like all the code signals to be exchanged between the port units in the control mode of the bus, a DTMF-coded signal. However, in order to make the status (mode) of the bus detectable if it continues, the status can be indicated, in addition, by the level of the direct-voltage level (DC level): during the control mode, the bus is set to a particular DC level and during the other bus modes, the 'appliance mode' (or 'transmission mode'), the DC potential between the two bus cable cores 1 is at 'quiescent level'. However, this mode signalling makes the transmission of a DTMF-coded switching signal on the bus in principle superfluous since, after all, the change in the DC value already functions as such; in that case, reference may be made to a DC switching signal, which is the leading or trailing edge, respectively, of the DC change. In practice, however, owing, inter alia, to response times, preference is nevertheless given to indicating the mode switching (also) by means of DTMF signals. Another possibility is to make use of a relatively high-frequency switching signal which (like a DC switching signal) falls outside the DTMF band (speech band) (however, the DC switching signal will nevertheless always be to some extent detectable in the speech band).

The bus interfaces 33,.. are so designed that, after it has been detected that the bus has been set to the control mode, all of them (except the bus interface 23 which has initiated said control mode) 'eavesdrop' on the DTMF control signals on the bus. Under the control of the calling appliance 21, the bus interface 23 then sends, via its appliance interface 24 and the control device 25, the ID code of the port unit 3 of the appliance 31 to which a connection must be effected. In the port units 3,.., the DTMF-coded ID code sent out in this way is compared with the 'individual' ID code stored in the code device 36,.. and, in the event of matching, this is transmitted to the control device 35. The control device 35 then investigates via the appliance interface 34 whether the connected appliance 31 is ready to exchange signals with the calling appliance 21. If that is the case, the control device 35 sends (via bus interface 33) a message (addressed using the ID code of the port unit 2) to the control device 25 (via bus interface 23) indicating that the called appliance 31 is ready. Control device 25 then closes the contacts 22 and control device 35 closes the contacts 32, as a result of which the appliances are therefore connected to one another via the bus. Finally, the bus is reset to the 'appliance mode' by sending out a mode switching signal to all the port units and the appliances 21 and 31 are informed via the appliance interfaces 24 and 34 that message exchange can start.

**Claims**

1. Bus system, in particular for domestic or small-business use, comprising a transmission bus and port units, for exchanging appliance signals between appliances connected to said transmission bus (1) via said port units, it being possible to set said port units by means of system control signals to a first, activated state in which the connected appliance (21) is switched through to the transmission bus, or to a second, unactivated state in which the connected appliance is isolated from the transmission bus, characterised in that the system control signals are DTMF signals.

2. Bus system according to Claim 1, characterised in that the transmission bus comprises one transmission channel for transmitting appliance signals in a first bus mode, the appliance mode, between appliances connected to the transmission bus via activated port units or for transmitting system control signals in a second bus mode, the system mode, between the port units to activate and/or deactivate one or more of said port units, mode switching from the first mode to the second mode or from the second mode to the first mode being preceded by a first or second mode switching signal.

3. Bus system according to Claim 2, characterised in that the mode switchings are initiated by one of the port units and in that one or two mode switching signals are sent out on the transmission bus by the initiating port unit.

4. Bus system according to Claim 2, characterised in that such a mode switching signal is also a DTMF signal.

5. Bus system according to Claim 2, characterised in that such a mode switching signal is a signal lying outside the frequency range of the DTMF signals.

6. Bus system according to Claim 5, characterised in that such a mode switching signal is a DC signal.

7. Bus system according to Claim 5, characterised in that such a mode switching signal is an RF signal.

8. Bus system according to Claim 2, characterised in that such a port unit (2) comprises a switching-through device (22), a bus interface (23), an appliance interface (24), a control device (25) and a code device (26) in which a port-specific identification code is stored, which switching-through device is connected, on the one hand, to the transmission bus (1) and, on the other hand, to at least one of the appliances (21, 31) mentioned and, under the control of the control device, can make or break the connection between said appliance and the transmission bus, which bus interface is connected, on the one hand, to the transmission bus and, on the other hand, to the control device, and, on the one hand, is able to detect the system control signals on the transmission bus and, on the other hand, is able to send out, under the control of the control device, call signals to one or more other port units via the transmission bus, and which appliance interface is connected, on the one hand, to the appliance and, on the other hand, to the control device and is able to detect appliance signals emitted by said appliance.

**Fig. 1**

## Fig. 2

## DOCUMENTS CONSIDERED TO BE RELEVANT

EP 92 20 1373

| Category | Citation of document with indication, where appropriate, of relevant passages | Relevant to claim | CLASSIFICATION OF THE APPLICATION (Int. Cl.5 ) |
|---|---|---|---|
| X | US-A-4 958 370 (SHIMANUKI)<br>* column 2, line 27 - column 3, line 8 *<br>* column 4, line 19 - line 51 * | 1 | H04L12/28<br>H04M9/02 |
| Y | | 2-8 | |
| | --- | | |
| X | US-A-4 899 378 (HAMER)<br>* column 1, line 47 - column 2, line 5 *<br>* column 2, line 59 - line 68 * | 1 | |
| A | | 2-4 | |
| | --- | | |
| D,Y | NL-A-8 400 115 (PHILIPS)<br>* the whole document * | 2-8 | |
| A | | 1 | |
| | ----- | | |
| | | | TECHNICAL FIELDS SEARCHED (Int. Cl.5 ) |
| | | | H04L<br>H04B<br>H04M |

The present search report has been drawn up for all claims

| Place of search | Date of completion of the search | Examiner |
|---|---|---|
| THE HAGUE | 29 JULY 1992 | MIKKELSEN C. |